# EUROPÄISCHE PATENTANMELDUNG

(11) **EP 3 971 023 A1**
(43) Veröffentlichungstag der Anmeldung: **23.03.2022**
(21) Anmeldenummer: 21185366.8
(22) Anmeldetag: 13.07.2021
(51) Int. Cl.: B60L 53/66, B60L 53/30, G06Q 20/14, G07F 15/00

(54) **VERFAHREN FÜR EINEN LADEVORGANG AN EINER LADESTATION FÜR ELEKTROFAHRZEUGE UND LADESTATIONEN**

(30) Priorität: 16.09.2020 DE 102020124156
(71) Anmelder: Westenergie AG, 45128 Essen (DE); E.ON Solutions GmbH, 45131 Essen (DE); Charge-ON GmbH, 45131 Essen (DE)
(72) Erfinder: Dr. Gaul, Armin, 59379 Selm (DE); Gläsel, Lukas, 45130 Essen (DE); Lehmann, Eckhard, 46446 Emmerich am Rhein (DE); Radnoti, Benjamin, 85354 Freising (DE)
(74) Vertreter: Gunzelmann, Rainer

(57) **Zusammenfassung**

Es wird ein Verfahren für einen Ladevorgang an einer Ladestation (10) für Elektrofahrzeuge (20) bereitgestellt, welches die folgenden Schritte umfasst: Erfassen eines Zählwerts, der einer während eines Ladevorgangs einem Elektrofahrzeug (20) zugeführten Energiemenge entspricht, Erfassen einer Identifikationskennung, die einen den Ladevorgang bezahlenden Kunden (60) eindeutig kennzeichnet, wobei die Identifikationskennung zumindest einen Teil einer Kreditkatennummer oder einer Girokontonummer umfasst, Initiieren, basierend auf dem Zählwert und der Identifikationskennung, einer Abrechnung des Ladevorgangs gegenüber dem Kunden (60), Erzeugen, basierend auf dem Zählwert und der Identifikationskennung, eines digitalen Kundenbelegs für die Abrechnung des Ladevorgangs, Initiieren einer Speicherung des digitalen Kundenbelegs auf einem Belegrechner (50) und Bereitstellen einer Herunterlademöglichkeit für den Kunden (60) zum Herunterladen des digitalen Kundenbelegs von dem Belegrechner (50).

## Beschreibung

### TECHNISCHES GEBIET

Die vorliegende Offenbarung betrifft das technische Gebiet der Ladestationen für Elektrofahrzeuge und der eichrechtskonformen Abrechnung von Ladevorgängen an Ladestationen für Elektrofahrzeuge gegenüber Kunden.

### HINTERGRUND

Öffentlich aufgestellte Ladestationen für Elektrofahrzeuge ermöglichen Haltern von Elektrofahrzeugen ihre Elektrofahrzeuge mit elektrische Energie zu laden. Da es ein Vielzahl von Anbietern von Elektromobilitätsdienstleistungen, eine Vielzahl von Roaming-Vereinbarungen zwischen solchen Anbietern und eine Vielzahl von Bezahlsystemen (beispielsweise basierend auf einer auf einem mobilen Endgerät installierten App oder basierend auf Radio-Frequency Identification-,RFID, Karten) gibt, ist es notwendig, für nicht bei einem jeweiligen Anbieter von Elektromobilitätsdienstleistungen registrierte oder von einer Roaming-Vereinbarung umfasste Kunden eine zusätzliche direkte Bezahlmöglichkeit anzubieten, bei der es sich meist um eine Möglichkeit zur Zahlung mit einer Kreditkarte und/oder einer EC-Karte handelt. Insbesondere muss Kunden die Möglichkeit gegeben werden, ohne eine vorherige Registrierung an öffentlich aufgestellten Ladestationen Elektrofahrzeuge laden zu können.

Die Messung, Bezahlung und Abrechnung von Ladevorgängen an Ladestationen für Elektrofahrzeuge muss in Deutschland eirechtskonform erfolgen. Dies umfasst insbesondere, dass die von dem Elektrofahrzeug bezogene Energiemenge durch einen geeichten Stromzähler in der Ladestation ermittelt wird und die mit der Bezahlung bzw. Abrechnung des Ladevorgangs zusammenhängenden Aktionen mit dem Eichrecht in Einklang stehen. Insbesondere muss nach Abschluss eines Ladevorgangs dem Kunden die Möglichkeit gegeben werden, zu prüfen, ob er die Energiemenge erhalten hat, welche ihm in Rechnung gestellt wird. Bedingt durch den Aufbau üblicher Ladestationen hat der Kunde in der Regel jedoch keine unmittelbare Möglichkeit, dies nach dem Ladevorgang an der Ladestation zu prüfen. Ferner müssen die Daten, welche der Kunde für seine Prüfung benötigt, manipulationssicher gespeichert und zur späteren Bereitstellung für den Kunden vorgehalten werden.

Die EP2531368B1 und die EP2755846B1 offenbaren Verfahren und Vorrichtungen zur Zuordnung eines von einer Ladestation erfassten Messwertes zu einer Transaktion. In einer Ausführungsform wird einem Kunden der Ladestation nach einem Ladvorgang zusammen mit einer Transaktionskennung ein Passwort zur Verfügung gestellt. Mit der Transaktionskennung und dem Passwort kann der Kunde auf den Rechnungsbeleg für den Ladevorgang zugreifen. Die beiden Druckschriften betreffen jedoch keine Lösung, wie Rechnungsdaten eines mit einer EC- oder Kreditkarte zahlenden Kunden, welche er für eine Rechnungsprüfung benötigt, eichrechtskonform gespeichert und zur späteren Bereitstellung für den Kunden vorgehalten werden können.

### KURZER ABRISS

Der vorliegenden Offenbarung liegt die Aufgabe zugrunde, ein Verfahren für einen Ladevorgang an einer Ladestation für Elektrofahrzeuge und eine Ladestation für Elektrofahrzeuge bereitzustellen, welche eine eichrechtskonforme Speicherung und Vorhaltung von Rechnungsbelegen ermöglicht.

Zur Lösung dieser Aufgabe wird ein Verfahren für einen Ladevorgang an einer Ladestation für Elektrofahrzeuge vorgeschlagen, welches die folgenden Schritte umfasst: Erfassen eines Zählwerts, der einer während eines Ladevorgangs einem Elektrofahrzeug zugeführten Energiemenge entspricht, Erfassen einer Identifikationskennung, die einen den Ladevorgang bezahlenden Kunden eindeutig kennzeichnet, wobei die Identifikationskennung zumindest einen Teil einer Kreditkatennummer oder einer Girokontonummer umfasst, Initiieren, basierend auf dem Zählwert und der Identifikationskennung, einer Abrechnung des Ladevorgangs gegenüber dem Kunden, Erzeugen, basierend auf dem Zählwert und der Identifikationskennung, eines digitalen Kundenbelegs für die Abrechnung des Ladevorgangs, Initiieren einer Speicherung des digitalen Kundenbelegs auf einem Belegrechner und Bereitstellen einer Herunterlademöglichkeit für den Kunden zum Herunterladen des digitalen Kundenbelegs von dem Belegrechner.

Das Erfassen des Zählwerts kann durch einen Stromzähler in der Ladestation erfolgen, insbesondere durch einen geeichten Stromzähler, der eichrechtskonform einen Zählwert bestimmt, welcher einer Energiemenge entspricht, die von der Ladestation dem Elektrofahrzeug zugeführt wird. Es kann sich dabei um ein intelligentes Messsystem (ein sogenanntes "Smart Meter") handeln, welches eine Energieabgabe in Kilowattstunden (kWh) misst. In Deutschland unterliegen Ladestationen und darin verbaute Stromzähler der Eichpflicht (siehe Mess- und Eichgesetz, EMessEG und MessEV; siehe auch Preisangabenverordnung PAngV). Am 1. April 2019 endete eine Übergangsfrist für die Verwendung nicht geeichter Stromzähler in Ladestationen. Nicht mehr zulässig sind reine Zeittarife sowie pauschale Gebühren je Ladevorgang. Erlaubt sind nur noch die folgenden Abrechnungsarten :
- eine rein verbrauchsabhängige Abrechnung ausschließlich nach geladenen Kilowattstunden;
- eine Kombination aus Kilowattstunden-Tarif und eine Start-, Grund- oder Infrastrukturnutzungsgebühr;
- eine Kombination aus Kilowattstunden-Tarif und Zeittarif;
- eine pauschale Abrechnung in Form einer monatlichen Flatrate; und
- eine kostenlose Abgabe von Strom.

Der Stromzähler kann auch gemäß der aktuellen Measuring Instruments Directive (MID) des Europäischen Parlaments geeicht sein.

Die Identifikationskennung kann von einer Bezahlvorrichtung, insbesondere einem Kartenterminal erfasst werden. Bei der Bezahlvorrichtung kann es sich um ein Kartenterminal mit einem Kreditkartenlesegerät handeln, in welches ein Kunde seine Debitkarte (z.B. Maestro-Karte) oder Kreditkarte (z.B. American Express-Karte) einführen oder an welches ein Kunde seine Debitkarte bzw. Kreditkarte halten kann, um die von der Ladestation bezogene Energiemenge gegenüber dem Betreiber der Ladestation abzurechnen. Es ist auch denkbar, dass über ein Mobilfunktelefon, in welchem eine Debitkarte oder Kreditkarte hinterlegt ist, ein drahtloser Bezahlvorgang (beispielsweise über Bluetooth oder RFID) an der Bezahlvorrichtung erfolgt. Beispielsweise kann die Bezahlvorrichtung eine Bezahlung über Apple Pay und/oder Google Pay unterstützen. Zur eichrechtskonformen Abrechnung der Zahlung erzeugt die Bezahlvorrichtung eine Identifikationskennung, die einer Zentraleinheit zugeführt werden kann. Beispielsweise kann es sich bei der Identifikationskennung um eine Kreditkartennummer, eine Girokontonummer und/oder Teile einer Kreditkartennummer oder einer Girokontonummer (beispielsweise die letzten vier Stellen einer Kreditkartennummer oder einer Girokontonummer) handeln, die die Bezahlvorrichtung von einer Karte bezieht.

Die Erzeugung des digitalen Kundenbelegs kann in der Bezahlvorrichtung erfolgen. Die Initiierung der Speicherung des digitalen Kundenbelegs auf dem Belegrechner und die Bereitstellung der Herunterlademöglichkeit für den Kunden zum Herunterladen des digitalen Kundenbelegs kann durch die Bezahlvorrichtung oder eine Steuerungsvorrichtung in der Ladestation erfolgen. Bei der Steuerungsvorrichtung kann es sich um eine zentrale Recheneinheit bzw. eine Mikrosteuereinheit handeln, welche die Funktionen der Ladestation zum Laden des Elektrofahrzeugs steuert. Insbesondere kann die Steuerungsvorrichtung eine Kommunikation mit einer Informationstechnik-Infrastruktur bzw. einem Backend, eine Nutzerauthentifizierung und ein Freischalten eines Ladevorgangs steuern, eine Kommunikation mit einem mit der Ladestation elektrisch verbundenen Elektrofahrzeug ausführen (beispielsweise gemäß der Norm ISO 15118), ein Lastmanagement der Ladestation steuern und Nutzerfunktionen an einer an der Ladestation angebrachten Anzeigevorrichtung visualisieren.

Bei dem Belegrechner handelt es sich um eine externe Recheneinheit (beispielsweise einen Cloud-Server), die mit der Ladestation in Kommunikationsverbindung steht und die dazu eingerichtet ist, den digitalen Kundenbeleg eichrechtskonform und manipulationssicher zu speichern und für den Kunden vorzuhalten. Dabei kann jegliche Kommunikation zwischen Ladestation und Belegrechner direkt über eine Kommunikationsschnittstelle (beispielsweise eine Luftschnittstelle eines Mobilfunknetzes) erfolgen. Es ist auch denkbar, dass die Kommunikation zwischen Ladestation und Belegrechner über die Zentraleinheit erfolgt.

Zur eichrechtskonformen Bereitstellung des digitalen Kundenbelegs kann das Verfahren ferner den Schritte Erfassen einer Identifikation der Ladestation und den Ladevorgang betreffende Zeitinformation (z.B. Beginn und Ende des Ladevorgangs) umfassen, wobei der digitale Kundenbeleg den Zählwert, die Identifikationskennung, die Identifikation der Ladestation und die den Ladevorgang betreffende Zeitinformation umfasst. Ferner kann der digitale Kundenbeleg Preisinformation umfassen. Dadurch kann dem Kunden eine Nachprüfbarkeit des Kundenbelegs ermöglicht werden.

Zur manipulationssicheren Übertragung der für den digitalen Kundenbeleg relevanten Daten kann das Verfahren ferner die Schritte digitales Signieren des Zählwerts, der Identifikationskennung, der Identifikation der Ladestation und der den Ladevorgang betreffenden Zeitinformation, und Senden des digital signierten Zählwerts, der digital signierten Identifikationskennung, der digital signierten Identifikation der Ladestation und der digital signierten den Ladevorgang betreffende Zeitinformation an eine Zentraleinheit umfassen. Insbesondere können der Zählwert ("Was"), die Identifikationskennung ("Wer"), die Identifikation der Ladestation ("Wo") und die den Ladevorgang betreffende Zeitinformation ("Wann") in ein Datenpaket zusammengefasst, digital signiert und an die Zentraleinheit gesendet werden, wodurch die Daten vor Manipulation gesichert werden.

Die digitale Signatur kann durch eine Signaturvorrichtung in der Ladestation erfolgen. Die Signaturvorrichtung kann mit dem Stromzähler, der Steuerungsvorrichtung und/oder der Bezahlvorrichtung verbunden sein. Die Signaturvorrichtung kann dazu eingerichtet sein, auf einen in der Ladestation gespeicherten privaten Schlüssel und einen in der Ladestation gespeicherten öffentlichen Schlüssel zuzugreifen. Beispielsweise kann es sich bei dem privaten Schlüssel und dem öffentlichen Schlüssel um in dem Stromzähler gespeicherte Messgeräteschlüssel handeln. Der öffentliche Schlüssel kann auch auf einem gesicherten, zentralen Server, beispielsweise einem Server einer Eichbehörde, gespeichert sein. Durch die digitale Signatur kann sichergestellt werden, dass das Datenpaket nachträglich nicht mehr manipuliert werden kann.

Die digitale Signierung kann insbesondere mit Hilfe zweier elektronischer Schlüssel, d.h. einem öffentlichen Schlüssel und einem privaten Schlüssel über ein asymmetrisches Verfahren erfolgen. Dabei können Daten, die mit dem privaten Schlüssel verschlüsselt wurden, nur mit dem öffentlichen Schlüssel entschlüsselt werden. Der private Schlüssel bleibt immer geheim, wohingegen der öffentliche Schlüssel jedermann zugänglich ist. Insbesondere kann der private Schlüssel nicht durch den öffentlichen Schlüssel errechnet werden. So wird von den digital zu signierenden Daten zunächst basierend auf einem mathematischen Verfahren die Quersumme gebildet, wodurch man den sogenannten "Hash-Wert" erhält. Dieser "Hash-Wert" wird dann mit Hilfe des privaten Schlüssels verschlüsselt. Mit dem öffentlichen Schlüssel kann die Signatur überprüft werden, in dem mit diesem die ursprüngliche Quersumme wiederhergestellt wird. Parallel wird von den signierten Daten erneut eine Quersumme gebildet und diese dann mit der vorliegenden entschlüsselten Quersumme verglichen. Eine Übereinstimmung ist der Beweis, dass eine Authentizität der Daten gegeben ist. Die Authentizitätsprüfung kann in der Zentraleinheit erfolgen. Auch der Belegrechner kann eine Authentizitätsprüfung ausführen.

Bei der Zentraleinheit handelt es sich um einen Zentralrechner, vorzugsweise einen Zentralrechner eines Betreibers der Ladestation (ein sogenanntes "Backend"), welcher unter anderem mehrere Ladestationen steuert und Abrechnungsfunktionen verarbeitet. Die Ladestation und die Zentraleinheit können beispielsweise über das Open Charge Point Protokoll, OCPP, miteinander kommunizieren.

Das Senden der Daten von der Ladestation zu der Zentraleinheit bzw. zu dem Belegrechner kann mit Hilfe einer Kommunikationsvorrichtung erfolgen. Bei der Kommunikationsvorrichtung kann es sich um jede Art von Kommunikationsmittel handeln, welches dazu eingerichtet ist, Daten von der Ladestation an den Belegrechner bzw. die Zentraleinheit zu senden. Insbesondere sendet die Kommunikationsvorrichtung das Datenpaket mit den verknüpften Daten und einer Signatur an die Zentraleinheit und/oder den Belegrechner. So kann es sich bei der Kommunikationsvorrichtung um eine drahtlose oder eine drahtgebundene Kommunikationsvorrichtung handeln, wie beispielsweise eine Mobilfunkvorrichtung oder ein Ethernet-Modul, die über eine Luftschnittstelle oder über das Internet Kommunikationsverbindungen zu dem Belegrechner bzw. der Zentraleinheit herstellt.

Zur manipulationssicheren und eichrechtskonformen Bereitstellung des digitalen Kundenbelegs für den Kunden kann das Verfahren ferner den Schritt Senden des digital signierten Zählwerts, der digital signierten Identifikationskennung, der digital signierten Identifikation der Ladestation und der digital signierten den Ladevorgang betreffende Zeitinformation an den Belegrechner umfassen. In dem Belegrechner wird entsprechend die Authentizität der empfangenen Daten überprüft.

Um dem Kunden die Möglichkeit zu geben, den Kundenbeleg auf eine korrekte Abrechnung der gelieferten Energiemenge zu prüfen, kann das Verfahren ferner den Schritt Verknüpfen des digitalen Kundenbelegs mit einer Herunterladeverknüpfung zum Herunterladen des digitalen Kundenbelegs von dem Belegrechner umfassen. Bei der Herunterladeverknüpfung kann es sich um einen Download-Link (beispielsweise einen Uniform Ressource Locator, URL) handeln, über den der Kunde den digitalen Kundenbeleg mit einem digitalen Endgerät von dem Belegrechner herunterladen kann.

Um die Komplexität der Datenübertragung über die Kommunikationsschnittstelle zwischen Ladestation und Belegrechner zu verringern, kann die Herunterladeverknüpfung in dem digitalen Kundenbeleg integriert werden.

Gemäß einer vorteilhaften Ausführungsform erzeugt die Bezahlvorrichtung, insbesondere das Kartenterminal, in der Ladestation in Reaktion auf eine Ladevorgangsbeendigungsnachricht von der Steuerungsvorrichtung in der Ladestation den digitalen Kundenbeleg und die Herunterladeverknüpfung, wobei die Bezahlvorrichtung, insbesondere das Kartenterminal, die Herunterladeverknüpfung an die Steuerungsvorrichtung sendet. Dabei kann die Kommunikation zwischen der Bezahlvorrichtung, insbesondere Kartenterminal, und Steuerungsvorrichtung über eine Datenleitung erfolgen, die vor einem unbemerkten Zugriff durch Dritte (beispielsweise durch eine Verplombung oder durch Signallack) geschützt ist. Entsprechend hat die Steuerungsvorrichtung die Möglichkeit, die Herunterladeverknüpfung dem Kunden mitzuteilen (beispielsweise auf einer Anzeigevorrichtung in der Ladestation), so dass der Kunde den Rechnungsbeleg einsehen und kontrollieren kann.

Für eine einfache Bereitstellung des digitalen Kundenbelegs für den Kunden kann das Verfahren ferner die Schritte Erzeugen eines Informationselements, welches mit der Herunterladeverknüpfung verknüpft ist, und Bereitstellen des Informationselements für den Kunden umfassen. Das Erzeugen und Bereitstellen des Informationselements kann in der Steuerungsvorrichtung erfolgen.

Vorzugsweise umfasst das Informationselement einen Quick Response-, QR, Code und das Verfahren umfasst ferner den Schritt Anzeigen des QR-Codes auf einer Anzeigevorrichtung der Ladestation. Dadurch wird es dem Kunden ermöglicht, auf einfache aber auch sichere Weise auf den digitalen Kundenbeleg Zugriff zu erlangen. Beispielsweise scannt der Kunde mit seinem mobilen Endgerät den angezeigten QR-Code, wodurch sich ein Internet-Browser auf dem mobilen Endgerät öffnet, welche dem Kunden unmittelbar den digitalen Kundenbeleg, der auf dem Belegrechner gespeichert ist, anzeigt.

Für eine effektive und manipulationssichere Bereitstellung einer Herunterlademöglichkeit des digitalen Kundenbelegs für den Kunden, kann das Verfahren ferner die Schritte Verknüpfen einer Herunterladeverknüpfung (beispielsweise einer URL) zum Herunterladen des digitalen Kundenbelegs mit dem Zählwert und der Identifikationskennung in einem Datenpaket, digitales Signieren des Datenpakets und Senden des digital signierten Datenpakets (d.h., des Datenpakets zusammen mit einer Signatur) an den Belegrechner und/oder die Zentraleinheit umfassen.

Zur manipulationssicheren und eichrechtskonformen Übermittlung und Speicherung des digitalen Kundenbelegs kann das Verfahren ferner die Schritte digitales Signieren des digitalen Kundenbelegs und Senden des digital signierten digitalen Kundenbelegs an den Belegrechner umfassen.

Um eine hinsichtlich der in der Ladestation benötigten Rechenleistung effektive, aber dennoch manipulationssichere Abrechnung eines Ladevorgangs gegenüber einem Kunden zu gewährleisten, kann das Verfahren des Weiteren die Schritte Berechnen, in der Steuerungsvorrichtung der Ladestation basierend auf dem Zählwert, eines Preises des Ladevorgangs, Senden, durch die Steuerungsvorrichtung, des berechneten Preises an ein Kartenterminal in der Ladestation, und Abrechnen, durch das Kartenterminal, des Preises über einen Zahlungsdienstleister umfassen. Bei dem Zahlungsdienstleister kann sich beispielsweise um eine Bank, d.h. beispielsweise einen Kreditkarten-Server einer Bank, handeln.

Für eine manipulationssichere und eichrechtskonforme Bereitstellung einer Herunterlademöglichkeit des digitalen Kundenbelegs für den Kunden kann das Verfahren ferner den Schritt Bereitstellen von Information betreffend ein Herunterladen des digitalen Kundenbelegs von dem Belegrechner in Transaktionsinformation für die Abrechnung umfassen. So können beispielsweise in einem Datenpaket eine URL zum Herunterladen des digitalen Kundenbelegs von dem Belegrechner mit zumindest Teilen einer Kreditkartennummer oder einer Girokontonummer verknüpft werden, das Datenpaket durch die Signatureinheit digital signiert werden und das digital signierte Datenpaket anschließend an den Belegrechner gesendet werden. Das Verknüpfen kann dabei durch die Steuerungsvorrichtung erfolgen und das Senden kann durch die Kommunikationsvorrichtung erfolgen.

Gemäß einem weiteren Aspekt der vorliegenden Offenbarung wird eine Ladestation für Elektrofahrzeuge vorgeschlagen, die Folgendes umfasst: Mittel zum Erfassen eines Zählwerts, der einer während eines Ladevorgangs einem Elektrofahrzeug zugeführten Energiemenge entspricht, Mittel zum Erfassen einer Identifikationskennung, die einen den Ladevorgang bezahlenden Kunden eindeutig kennzeichnet, wobei die Identifikationskennung zumindest einen Teil einer Kreditkatennummer oder einer Girokontonummer umfasst, Mittel zum Initiieren, basierend auf dem Zählwert und der Identifikationskennung, einer Abrechnung des Ladevorgangs gegenüber dem Kunden, Mittel zum Erzeugen, basierend auf dem Zählwert und der Identifikationskennung, eines digitalen Kundenbelegs für die Abrechnung des Ladevorgangs, Mittel zum Initiieren einer Speicherung des digitalen Kundenbelegs auf einem Belegrechner und Mittel zum Bereitstellen einer Herunterlademöglichkeit für den Kunden zum Herunterladen des digitalen Kundenbelegs von dem Belegrechner.

Bei den Mitteln zum Erfassen eines Zählwerts kann es sich um einen geeichten Stromzähler handeln, bei den Mitteln zum Erfassen einer Identifikationskennung kann es sich um ein Kartenterminal handeln, bei den Mitteln zum Initiieren einer Abrechnung kann es sich um eine Steuerungsvorrichtung handeln, bei den Mitteln zum Erzeugen des digitalen Kunden Belegs kann es sich um ein Kartenterminal handeln und bei den Mitteln zum Bereitstellen der Herunterlademöglichkeit kann es sich um ein Kartenterminal oder eine Steuerungsvorrichtung handeln.

Die vorliegende Offenbarung betrifft ferner ein Ladestationssystem für Elektrofahrzeuge umfassend die vorstehend beschriebene Ladestation und einen Belegrechner.

Das Ladestationssystem kann ferner eine Zentraleinheit umfassen.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder bereits Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren, Systeme und Vorrichtungen ergeben sich aus der nachfolgenden Beschreibung von Ausführungsbeispielen und den Figuren.
- Fig. 1: zeigt eine schematische Darstellung eines Ausführungsbeispiels eines Ladesystems umfassend eine Ladestation, ein zu ladendendes Elektrofahrzeug, eine Zentraleinheit und einen Belegrechner;
- Fig. 2: zeigt ein Flussdiagramm eines ersten Ausführungsbeispiels eines Verfahrens für einen Ladevorgang an einer Ladestation für Elektrofahrzeuge; und
- Figs. 3 und 4: zeigen ein Flussdiagramm eines zweiten Ausführungsbeispiels eines Verfahrens für einen Ladevorgang an einer Ladestation für Elektrofahrzeuge.

### DETAILLIERTE BESCHREIBUNG

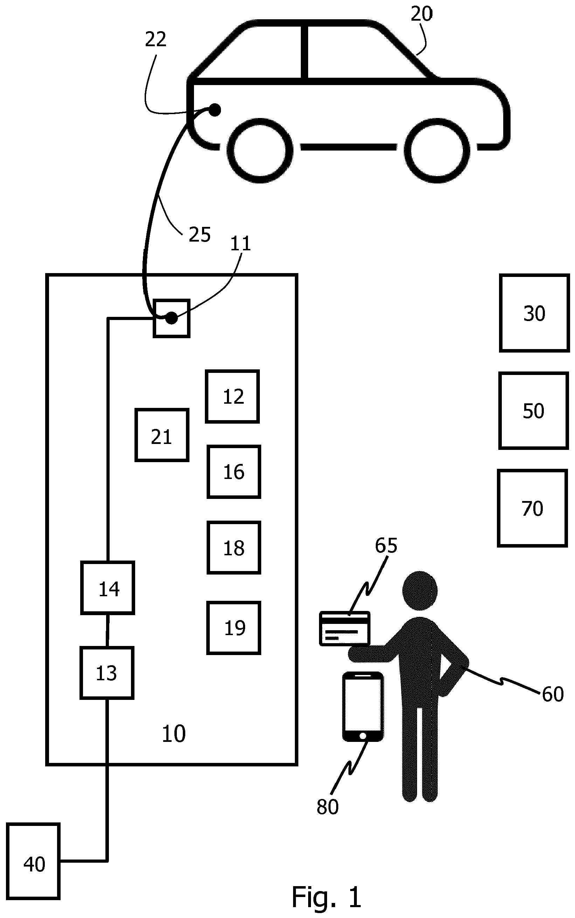

Die Fig. 1 zeigt eine schematische Darstellung eines Ausführungsbeispiels eines Ladesystems umfassend eine Ladestation 10, ein zu ladendendes Elektrofahrzeug 20, eine Zentraleinheit 30, einen Belegrechner 50 und einen Zahlungsdienstleister 70.

Die Ladestation 10 umfasst einen Ladeanschluss 11, an den ein Ladekabel 25 zum Laden des Elektrofahrzeug 20 angeschlossen werden kann, einen geeichten Stromzähler 14, einen elektrischen Anschluss 13, über den die Ladestation 10 von einem Energieversorgungsnetz 14 mit elektrischer Energie versorgt wird, eine Steuerungsvorrichtung 12 zum Steuern des Ladevorgangs in der Ladestation 10, eine Bezahlvorrichtung 16, eine Signaturvorrichtung 18, eine Kommunikationsvorrichtung 19 und eine Anzeigevorrichtung 21.

Das Elektrofahrzeug 20 weist ebenfalls einen Ladeanschluss 22 auf, in den das andere Ende des Ladekabels 25 gesteckt werden kann, so dass das Elektrofahrzeug 20 von der Ladestation 10 mit elektrischer Energie geladen wird.

Bei der Anzeigevorrichtung 21 handelt es sich um ein berührungsempfindliches Touch-Display. Will ein Fahrzeughalter 60 sein Elektrofahrzeug 20 mit elektrischer Energie laden, so werden ihm auf der Anzeigevorrichtung 21 mehrere Bezahlmöglichkeiten vorgeschlagen. Der Fahrzeughalter wählt eine Zahlung mit seiner Kreditkarte 65 aus. Anschließend führt der Fahrzeughalter 60 seine Kreditkarte 65 (beispielsweise eine American Express-Kreditkarte) in die als Kartenterminal ausgebildete Bezahlvorrichtung 16 ein. Danach autorisiert die Bezahlvorrichtung 16 ein Sicherheitsbetrag (beispielsweise 25 €) von der Kreditkarte 65. Anschließend startet nach Verbindung des Ladekabels 25 mit den Anschlüssen 11 und 22 der Ladevorgang. Dabei zählt der geeichte Stromzähler 14 die von der Ladestation 10 dem Elektrofahrzeug 20 zugeführte elektrische Energie und bestimmt einen Zählwert. Nach Ende des Ladevorgangs zieht der Fahrzeughalter 60 das Ladekabel 25 von dem Ladeanschluss 11 ab. Anschließend erfolgt eine Zahlung über die Bezahlvorrichtung 16 und darauffolgend eine Zahlung über die Kreditkarte 65 durch den Zahlungsdienstleister 70.

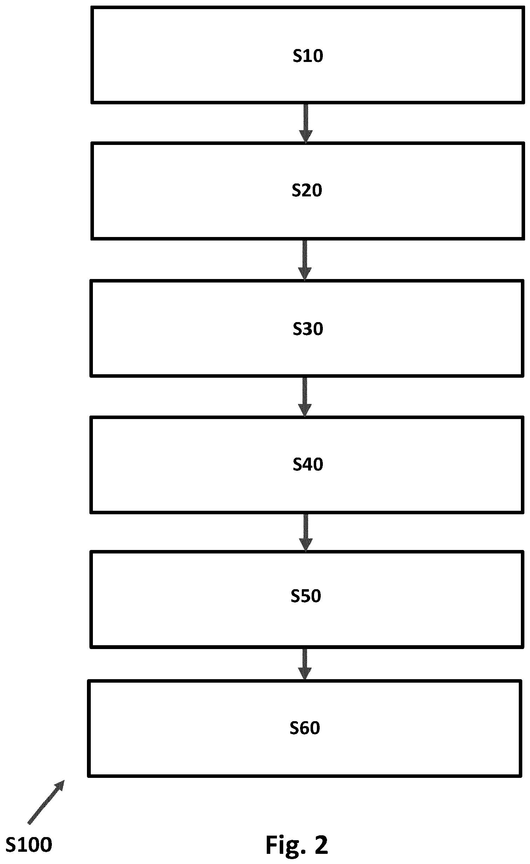

Die Fig. 2 zeigt ein Flussdiagramm eines ersten Ausführungsbeispiels eines Verfahrens für einen Ladevorgang an einer Ladestation für Elektrofahrzeuge. Das Verfahren kann von der in der Fig. 1 gezeigten Ladestation 10 ausgeführt werden, die mit der Zentraleinheit 30, dem Belegrechner 50 und dem Zahlungsdienstleister 70 über die Kommunikationsvorrichtung 19 in Kommunikationsverbindung steht.

Das Verfahren S100 umfasst die Schritte Erfassen S10 eines Zählwerts, der einer während eines Ladevorgangs einem Elektrofahrzeug 20 zugeführten Energiemenge entspricht, Erfassen S20 einer Identifikationskennung, die einen den Ladevorgang bezahlenden Kunden 60 eindeutig kennzeichnet, wobei die Identifikationskennung zumindest einen Teil einer Kreditkatennummer oder einer Girokontonummer umfasst, Initiieren S30, basierend auf dem Zählwert und der Identifikationskennung, einer Abrechnung des Ladevorgangs gegenüber dem Kunden 60, Erzeugen S40, basierend auf dem Zählwert und der Identifikationskennung, eines digitalen Kundenbelegs für die Abrechnung des Ladevorgangs, Initiieren S50 einer Speicherung des digitalen Kundenbelegs auf einem Belegrechner 50 und Bereitstellen S60 einer Herunterlademöglichkeit für den Kunden 60 zum Herunterladen des digitalen Kundenbelegs von dem Belegrechner 50.

Gemäß einer Weiterbildung des Verfahrens der Fig. 2 erlangt die Steuerungsvorrichtung 12 nach der Beendigung des Ladevorgangs des Elektrofahrzeugs 20 die folgenden Daten: einen Zählwert betreffend eine durch das Elektrofahrzeug 20 von der Ladestation 10 bezogene Energiemenge ("Was"), zumindest einen Teil einer Kreditkartennummer ("Wer"), Information zur Ladestation ("Wo") und Zeitinformation zum Ladevorgang ("Wann"). Diese Daten werden von der Steuerungsvorrichtung 12 zu einem Datenpaket zusammengefasst, von der Steuerungsvorrichtung 12 der Signaturvorrichtung 18 zugeführt und durch die Signaturvorrichtung 18 digital signiert. Zusätzlich kann von der Bezahlvorrichtung 16 eine Herunterladeverknüpfung (z.B., ein Downloadlink, wie eine URL) erzeugt werden. Diese Herunterladeverknüpfung kann von der Bezahlvorrichtung 16 an die Steuerungsvorrichtung 12 gesendet werden, wobei die Steuerungsvorrichtung 12 zusätzlich die Herunterladeverknüpfung in das Datenpaket aufnimmt. Anschließend wird dieses erweiterte Datenpaket von der Steuerungsvorrichtung 12 an die Signaturvorrichtung 18 gesendet, von welcher das Datenpaket digital signiert wird.

Das digital signierte Datenpaket wird anschließend an die Zentraleinheit 30 gesendet. In der Zentraleinheit 30 erfolgt eine Authentizitätsprüfung des empfangenen Datenpakets.

Die in dem Datenpaket enthaltenen Daten werden von der Steuerungsvorrichtung 12 an die Bezahlvorrichtung 16 weitergeleitet. Basierend auf diesen Daten erzeugt das Kartenterminal einen digitalen Kundenbeleg. Der digitale Kundenbeleg wird an die Signaturvorrichtung gesendet, welche den digitalen Kundenbeleg digital signiert. Der digital signierte Kundenbeleg wird anschließend von der Kommunikationsvorrichtung 19 an den Belegrechner 50 gesendet. Parallel dazu initiiert die Bezahlvorrichtung 16 über den Zahlungsdienstleister 70 eine Abrechnung des Rechnungsbetrages von der Kreditkarte 65.

Entsprechend wurde der digitale Kundenbeleg manipulationssicher zum Belegrechner 50 gesendet, wo er manipulationssicher gespeichert wird. Anschließend sendet die Bezahlvorrichtung 16 die Herunterladeverknüpfung an die Steuerungsvorrichtung 12, welche basierend auf der Herunterladeverknüpfung einen QR-Code erzeugt. Die Steuerungsvorrichtung 12 instruiert dann die Anzeigevorrichtung 21, den QR-Code anzuzeigen.

Der Kunde hat jetzt mit seinem Mobiltelefon 80, d.h. der Kamera seines Mobiltelefons 80, die Möglichkeit, den auf der Anzeigevorrichtung 21 angezeigten QR-Code zu scannen, wodurch das Mobiltelefon 80 über eine in dem QR-Code hinterlegten URL auf den in dem Belegrechner 50 gespeicherten digitalen Kundenbeleg zugreifen kann.

Überprüfungen des digital signierten Datenpakets bzw. der digital signierten digitalen Kundenbelege auf Authentizität erfolgen in der Zentraleinheit 30 und dem Belegrechner 50. Folglich können digitale Kundenbelege eichrechtskonform übertragen, gespeichert und für den Kunden 60 zur Kontrolle vorgehalten werden.

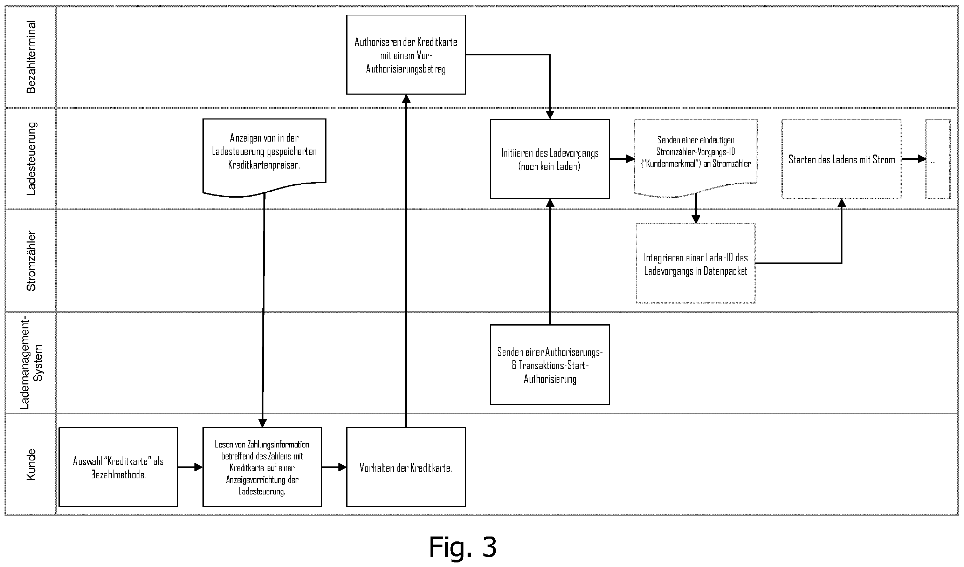

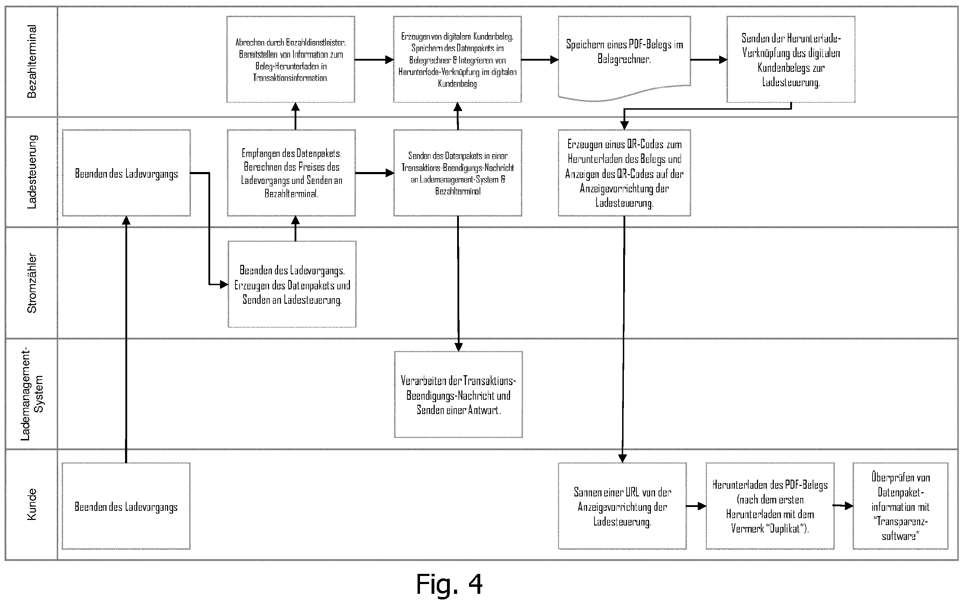

Die Figuren 3 und 4 zeigen ein Flussdiagramm eines zweiten Ausführungsbeispiels eines Verfahrens für einen Ladevorgang an einer Ladestation für Elektrofahrzeuge. Das Verfahren kann von der in der Fig. 1 gezeigten Ladestation 10, der Zentraleinheit 30, dem Belegrechner 50 und dem Zahlungsdienstleister 70 ausgeführt werden. Einzelne Teile des Verfahrens können auch individuell von der Ladestation 10, der Zentraleinheit 30, dem Belegrechner 50 und/oder dem Zahlungsdienstleister 70 ausgeführt werden.

Bezugnehmend auf die Fig. 1 bezieht sich die jeweilige linke Spalte der Figuren 3 und 4 auf den Kunden 60 (mit seiner Kreditkarte 65 und seinem Mobilfunkgerät 80), ein Lademanagement-System (Charge Point Management System, CPMS), welches der Zentraleinheit 30 (d.h. dem Backend) entspricht, den Stromzähler 14, der als Ladesteuerung ausgebildeten Steuerungsvorrichtung 12 und der als Kartenterminal bzw. Bezahlterminal ausgebildeten Bezahlvorrichtung 16. Als Lademanagement-System CPMS bezeichnet der Open Charge Point Protocol-, OCPP, Standard in der Version vor der Version 2.0 ein Backend Software System, mit dem die Ladestation 10 in Kommunikationsverbindung steht. Ab der OCPP Version 2.0 wird das CPMS als Charging Station Management System, CSMS, bezeichnet, wobei CSMS die gleiche Backend-Einheit meint. Ferner wird in den Figuren 3 und 4 auf den Belegrechner 50 Bezug genommen. Der Ablauf der Figuren 3 und 4 erfolgt von links nach rechts.

Will der Kunde 60 sein Elektrofahrzeug 20 von der Ladestation 10 mit elektrischer Energie laden lassen, so wählte er zunächst über die Anzeigevorrichtung 21 als Zahlungsmittel "Kreditkarte" aus, um den Ladevorgang mit seiner Kreditkarte 65 zu bezahlen. Auf der Anzeigevorrichtung 21 werden dem Kunden 60 als Zahlungsinformation das Zahlungsmittel "Kreditkarte" zusammen mit in der Ladesteuerung gespeicherten Kreditkartenpreisen angezeigt. Ist der Kunde 60 mit dem Kreditkartenpreis einverstanden, so kann er seine Kreditkarte 65 an das Kartenterminal 16 halten, wodurch von dem Kartenterminal 16 von der Kreditkarte 65 ein Vor-Autorisierungsbetrag von 25 € autorisiert wird.

Danach sendet das Lademanagement-System 30 eine Autorisierungs- und Transaktions-Start-Autorisierungs-Nachricht an die Ladesteuerung 12. In Reaktion auf diese Nachricht erfolgt durch die Ladesteuerung 12 eine Initiierung des Ladevorgangs, wobei zu diesem Zeitpunkt noch kein Laden des Elektrofahrzeugs 20 mit elektrischer Energie erfolgt. In Reaktion auf die Initiierung sendet die Ladesteuerung 12 eine eindeutige Stromzähler-Vorgangs-ID, d.h. ein "Kundenmerkmal", an den Stromzähler 14. Die eindeutige Stromzähler-Vorgangs-ID umfasst, eine Transaktions ID (TID), eine Zeit- und Datums-Angabe und eine Transaktionsnummer.

Der Stromzähler 14 integriert eine Lade-ID des Ladevorgangs in ein Datenpaket. Das Datenpaket wird von dem Stromzähler 14 an die Ladesteuerung 12 gesendet, die daraufhin eine Ladeelektronik des Elektrofahrzeugs zum Laden des Elektrofahrzeugs 20 mit elektrischer Energie steuert.

In der Fig. 4 ist der zweite Teil des Verfahrens gezeigt, bei dem der Kunde 60 zunächst den Ladevorgang beendet. Dies kann dadurch erfolgen, indem der Kunde 60 das Ladekabel 25 von zumindest einem der beiden Ladeanschlüsse 11 und 22 abzieht. Die Ladesteuerung 12 erkennt dies und beendet den Ladevorgang. Nach Beendigung des Ladevorgangs erzeugt der Stromzähler 14 ein Datenpaket, welches einen Zählwert umfasst, der einer Energiemenge entspricht, welche die Ladestation 10 dem Elektrofahrzeug 20 zugeführt hat. Der Stromzähler 14 sendet das Datenpaket an die Ladesteuerung 12. Die Ladesteuerung 12 empfängt das Datenpaket, berechnet den Preis des Ladevorgangs und sendet das Datenpaket zusammen mit dem Preis des Ladevorgangs an das Kartenterminal 16. Die Ladesteuerung 12 kann weitere Informationselemente, so wie einen Teil der Kreditkartennummer der Kreditkarte 65, Information zur Ladestation und Zeitinformation zum Ladevorgang, in dem Datenpaket integrieren. Das Datenpaket kann ferner von der Ladesteuerung 12 der Signaturvorrichtung 18 zugeführt und durch die Signaturvorrichtung 18 digital signiert werden.

Das Kartenterminal 16 empfängt das Datenpaket zusammen mit der Preisinformation und instruiert den Zahlungsdienstleister 70, die Zahlung des Rechnungsbetrags über die Kreditkarte 65 vorzunehmen. Des Weiteren stellt das Kartenterminal 16 Information zum Herunterladen eines digitalen Kundenbelegs von dem Belegrechner 50 bereit. Diese Information wird von dem Kartenterminal 16 in Transaktionsinformation bereitgestellt.

Die Ladesteuerung 12 sendet des Weiteren in einer Transaktions-Beendigungs-Nachricht das von der Signaturvorrichtung 18 digital signierte Datenpaket an das Lade-Managementsystem 30 und das Kartenterminal 16.

Das Lade-Managementsystem 30 verarbeitet die Transaktions-Beendigungs-Nachricht und sendet eine Antwortnachricht an die Ladesteuerung 12.

In Reaktion auf den Empfang des Datenpakets erzeugt das Kartenterminal 16 den digitalen Kundenbeleg. Das von der Signaturvorrichtung 18 digital signierte Datenpaket wird anschließend an den Belegrechner 50 gesendet und dort gespeichert. Ferner wird durch das Kartenterminal 16 eine Herunterladeverknüpfung (beispielsweise eine Download-Link-URL) in dem digitalen Kundenbeleg integriert. Anschließend instruiert das Kartenterminal 16 den Belegrechner 50, eine PDF-Version des digitalen Kunden Belegs zu speichern.

Das Kartenterminal 16 sendet danach die Herunterladeverknüpfung des digitalen Kundenbelegs an die Ladesteuerung 12.

Die Ladesteuerung 12 erzeugt daraufhin einen QR-Code zum Herunterladen des digitalen Kundenbelegs von dem Belegrechner 50 und zeigt den QR-Code auf der Anzeigevorrichtung 21 dem Kunden 60 an.

Der Kunde 60 kann anschließend mit der Kamera seines Mobiltelefons 80 den QR-Code scannen, was ihm ermöglicht, den digitalen Kundenbeleg (beispielsweise als PDF-Version) von dem Belegrechner 50 herunterzuladen. Das Herunterladen kann verschlüsselt erfolgen. Ein zweites Herunterladen des Kundenbelegs ist möglich, jedoch wird dann der digitale Kundenbeleg durch den Belegrechner als Duplikat gekennzeichnet.

Folglich wurde dem Kunden 60 der digitale Kundenbeleg bereitgestellt, was ihm ermöglicht, die Abrechnung auf Korrektheit zu überprüfen. Dies kann beispielsweise unter Zuhilfenahme einer sogenannten "Transparenzsoftware" erfolgen. Die PDF-Version des digitalen Kundenbelegs kann die Abrechnungsinformation (bezogene Energiemenge in kWh, den Preis, etc.) und die Herunterladeinformation zum Herunterladen des digitalen Kundenbelegs mit der Transparenzsoftware umfassen.

Ferner kann vorgesehen sein, dass der Kunde 60 zum Herunterladen des digitalen Kundebelegs von einer Homepage des Betreibers der Ladestation 10 eine bestimmte Zahlenfolge seiner Kreditkartennummer (beispielsweise die letzten vier Stellen) eingeben muss. Es ist auch denkbar, falls der Kunde 60 bereits auf der Homepage des Betreibers der Ladestation 10 registriert ist, dass er nicht zusätzlich die bestimmte Zahlenfolge seiner Kreditkartennummer eingeben muss, sondern ein Einloggen auf der Homepage für einen Zugriff auf den digitalen Kundenbeleg ausreicht.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Verfahren für einen Ladevorgang an einer Ladestation (10) für Elektrofahrzeuge (20), umfassend
Erfassen (S10) eines Zählwerts, der einer während eines Ladevorgangs einem Elektrofahrzeug (20) zugeführten Energiemenge entspricht;
Erfassen (S20) einer Identifikationskennung, die einen den Ladevorgang bezahlenden Kunden (60) eindeutig kennzeichnet, wobei die Identifikationskennung zumindest einen Teil einer Kreditkatennummer oder einer Girokontonummer umfasst;
Initiieren (S30), basierend auf dem Zählwert und der Identifikationskennung, einer Abrechnung des Ladevorgangs gegenüber dem Kunden (60);
Erzeugen (S40), basierend auf dem Zählwert und der Identifikationskennung, eines digitalen Kundenbelegs für die Abrechnung des Ladevorgangs;
Initiieren (S50) einer Speicherung des digitalen Kundenbelegs auf einem Belegrechner (50); und
Bereitstellen (S60) einer Herunterlademöglichkeit für den Kunden (60) zum Herunterladen des digitalen Kundenbelegs von dem Belegrechner (50).

2. Verfahren nach Anspruch 1, ferner umfassend
Erfassen einer Identifikation der Ladestation (10) und den Ladevorgang betreffende Zeitinformation, wobei
der digitale Kundenbeleg den Zählwert, die Identifikationskennung, die Identifikation der Ladestation (10) und die den Ladevorgang betreffende Zeitinformation umfasst.

3. Verfahren nach Anspruch 2, ferner umfassend
digitales Signieren des Zählwerts, der Identifikationskennung, der Identifikation der Ladestation (10) und der den Ladevorgang betreffenden Zeitinformation; und
Senden des digital signierten Zählwerts, der digital signierten Identifikationskennung, der digital signierten Identifikation der Ladestation (10) und der digital signierten den Ladevorgang betreffende Zeitinformation an eine Zentraleinheit (30).

4. Verfahren nach Anspruch 3, ferner umfassend
Senden des digital signierten Zählwerts, der digital signierten Identifikationskennung, der digital signierten Identifikation der Ladestation (10) und der digital signierten den Ladevorgang betreffende Zeitinformation an den Belegrechner (50).

5. Verfahren nach einem der vorhergehenden Ansprüche, ferner umfassend
Verknüpfen des digitalen Kundenbelegs mit einer Herunterladeverknüpfung zum Herunterladen des digitalen Kundenbelegs von dem Belegrechner (50).

6. Verfahren nach Anspruch 5, ferner umfassend
Integrieren der Herunterladeverknüpfung in dem digitalen Kundenbeleg.

7. Verfahren nach einem der Ansprüche 5 oder 6, wobei
eine Bezahlvorrichtung, insbesondere ein Kartenterminal (16), in der Ladestation (10) in Reaktion auf eine Ladevorgangsbeendigungsnachricht von einer Steuerungsvorrichtung (12) in der Ladestation (10) den digitalen Kundenbeleg und die Herunterladeverknüpfung erzeugt und
die Bezahlvorrichtung, insbesondere das Kartenterminal (16), die Herunterladeverknüpfung an die Steuerungsvorrichtung (12) sendet.

8. Verfahren nach einem der Ansprüche 5 bis 7, ferner umfassend
Erzeugen eines Informationselements, welches mit der Herunterladeverknüpfung verknüpft ist; und
Bereitstellen des Informationselements für den Kunden (60).

9. Verfahren nach Anspruch 8, wobei
das Informationselement einen QR-Code umfasst und das Verfahren ferner umfasst
Anzeigen des QR-Codes auf einer Anzeigevorrichtung (21) der Ladestation (10).

10. Verfahren nach Anspruch 1, ferner umfassend
Verknüpfen einer Herunterladeverknüpfung zum Herunterladen des digitalen Kundenbelegs mit dem Zählwert und der Identifikationskennung in einem Datenpaket;
digitales Signieren des Datenpakets; und
Senden des digital signierten Datenpakets an den Belegrechner (50) und/oder eine Zentraleinheit (30).

11. Verfahren nach einem der vorhergehenden Ansprüche, ferner umfassend
digitales Signieren des digitalen Kundenbelegs; und
Senden des digital signierten digitalen Kundenbelegs an den Belegrechner (50).

12. Verfahren nach einem der vorhergehenden Ansprüche, ferner umfassend die folgenden Schritte:
Berechnen, in einer Steuerungsvorrichtung (12) der Ladestation (10) basierend auf dem Zählwert, eines Preises des Ladevorgangs;
Senden, durch die Steuerungsvorrichtung (12), des berechneten Preises an ein Kartenterminal (16) in der Ladestation (10); und
Abrechnen, durch das Kartenterminal (16), des Preises über einen Zahlungsdienstleister (70); und/oder
den folgenden Schritt:
Bereitstellen von Information betreffend ein Herunterladen des digitalen Kundenbelegs von dem Belegrechner (50) in Transaktionsinformation für die Abrechnung.

13. Ladestation (10) für Elektrofahrzeuge (20), umfassend
Mittel (14) zum Erfassen eines Zählwerts, der einer während eines Ladevorgangs einem Elektrofahrzeug zugeführten Energiemenge entspricht;
Mittel (16) zum Erfassen einer Identifikationskennung, die einen den Ladevorgang bezahlenden Kunden (60) eindeutig kennzeichnet, wobei die Identifikationskennung zumindest einen Teil einer Kreditkatennummer oder einer Girokontonummer umfasst;
Mittel (16) zum Initiieren, basierend auf dem Zählwert und der Identifikationskennung, einer Abrechnung des Ladevorgangs gegenüber dem Kunden (60);
Mittel (16) zum Erzeugen, basierend auf dem Zählwert und der Identifikationskennung, eines digitalen Kundenbelegs für die Abrechnung des Ladevorgangs;
Mittel (12, 16) zum Initiieren einer Speicherung des digitalen Kundenbelegs auf einem Belegrechner (50); und
Mittel (21) zum Bereitstellen einer Herunterlademöglichkeit für den Kunden zum Herunterladen des digitalen Kundenbelegs von dem Belegrechner (50).

14. Ladestationssystem für Elektrofahrzeuge (20), umfassend
die Ladestation (10) nach Anspruch 13; und
einen Belegrechner (50).

15. Ladestationssystem für Elektrofahrzeuge (20) nach Anspruch 14, ferner umfassend
eine Zentraleinheit (30).
